# DEMANDE DE BREVET EUROPEEN

(11) **EP 1 231 463 A1**
(43) Date de publication de la demande: **14.08.2002**
(21) Numéro de dépôt: 02290294.4
(22) Date de dépôt: 07.02.2002
(51) Int. Cl.: G01N 27/06

(54) **Dispositif détecteur de bulles de gaz dans un liquide**

(30) Priorité: 08.02.2001 FR 0101694
(71) Demandeur: SC2N, 78180 Montigny-le-Bretonneux (FR)
(72) Inventeur: Castro, Pascal, 14120 Mondeville (FR)
(74) Mandataire: Texier, Christian

(57) **Abrégé**

La présente invention concerne un détecteur de bulles de gaz dans un liquide, caractérisé par le fait qu'il comprend au moins deux électrodes (10, 20) et un dispositif (30) apte à mesurer la résistance électrique entre les deux électrodes (10, 20).

## Description

La présente invention concerne le domaine des détecteurs de bulles de gaz dans un liquide.

La présente invention peut trouver notamment, mais non exclusivement, application dans la détection de bulles de gaz dans un circuit d'eau de refroidissement de moteur à explosion de véhicule automobile.

La présente invention a pour but de proposer un dispositif de détection à la fois simple, fiable et économique.

Ce but est atteint dans le cadre de la présente invention grâce à un dispositif comprenant au moins deux électrodes et un dispositif apte à mesurer la résistance électrique entre les deux électrodes.

D'autres caractéristiques, buts et avantages de la présente invention apparaîtront à la lecture de la description détaillée qui va suivre, et en regard des dessins annexés, donnés à titre d'exemple non limitatif et sur lesquels :
- la figure 1 représente une vue schématique d'un dispositif conforme à la présente invention,
- la figure 2 représente schématiquement le signal obtenu en sortie du dispositif de mesure conforme à la présente invention, et
- la figure 3 représente schématiquement un dispositif conforme à une forme évoluée de la présente invention.

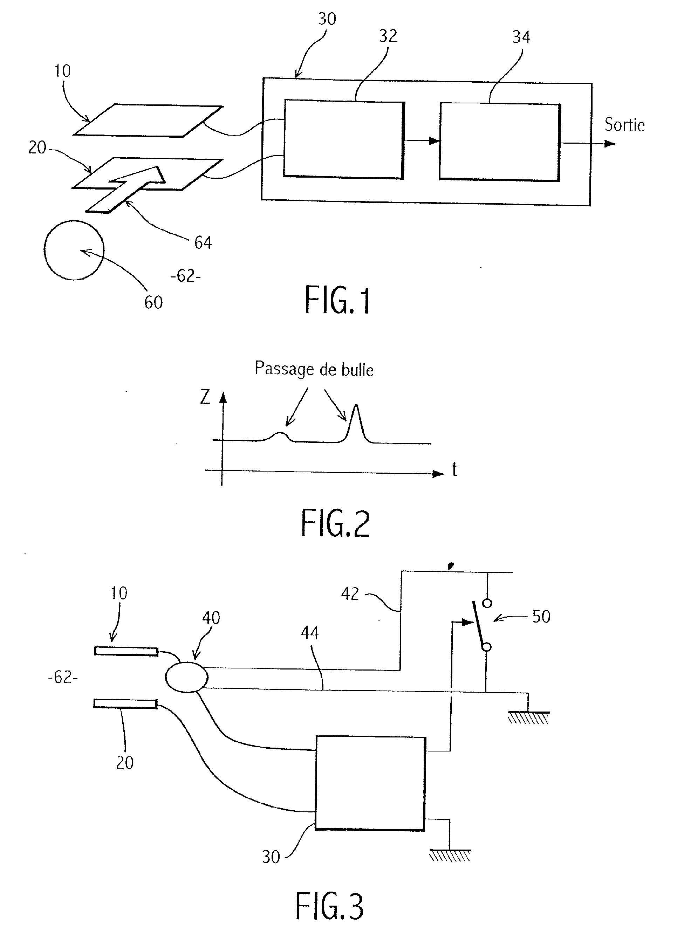

On aperçoit sur la figure 1 annexée un dispositif conforme à la présente invention comprenant essentiellement deux électrodes 10, 20, associées à un dispositif 30 de mesure de la résistance électrique entre les deux électrodes 10, 20.

Sur la figure 1, on a symbolisé sous la référence 60 une bulle éventuelle de gaz présente dans le liquide 62 dans lequel sont placées les électrodes de détection 10, 20. Typiquement la dimension des bulles (diamètre) est comprise entre 0,3 et 3mm.

De préférence, comme on le voit sur la figure 1, les électrodes 10, 20 sont des électrodes planes parallèles et disposées en regard. Plus précisément encore, les électrodes 10, 20 sont placées dans une zone d'écoulement du liquide, parallèlement à la direction de cet écoulement symbolisée par la référence 64 sur la figure 1. Ainsi, l'écoulement de liquide 62 susceptible d'inclure des bulles 60 passe entre les deux électrodes 10, 20.

Le dispositif de détection 30 comporte essentiellement un dispositif 32 de mesure de la résistance électrique entre les électrodes 10, 20.

En l'absence de bulles, la résistance électrique mesurée entre les deux électrodes 10, 20 dépend de la conductivité du liquide 62 et de la géométrie des électrodes 10, 20.

Le passage d'une bulle 60 entre les électrodes 10, 20 modifie notoirement la résistance mesurée entre celles-ci.

La sensibilité du système dépend principalement de la géométrie des électrodes 10, 20 par rapport à la taille des bulles 60 que l'on veut détecter.

Pour optimiser le système, de préférence, dans le cadre de la présente invention, les électrodes 10, 20 ont des dimensions (longueur, largeur, écartement) du même ordre de grandeur, voire un peu supérieures au diamètre des bulles 60. Typiquement la longueur et l'écartement des électrodes 10, 20 est comprise entre quelques mm et quelques cm. Cependant, il faut noter que des bulles beaucoup plus grandes que les électrodes 10, 20, ainsi que des bulles 60 d'une taille sensiblement inférieure à celle des électrodes 10, 20 influencent également la résistance électrique entre les électrodes 10, 20 et peuvent par conséquent être détectées dans le système conforme à la présente invention.

Comme indiqué précédemment dans le cadre de l'invention, la détection se fait en mesurant les variations de la résistance aux bornes des électrodes 10, 20. L'échelle de temps pour mesurer ces variations (temps entre deux mesures ou constantes de temps du dérivateur) doit correspondre au temps moyen que met une bulle 60 pour parcourir les électrodes 10, 20, lequel temps dépend lui-même de la taille des électrodes 10, 20 et de la vitesse des bulles 60 à détecter. Typiquement de la constante de temps est comprise entre quelques centaines de microsecondes et quelques millisecondes pour une vitesse de quelques mètres par seconde.

On notera que dans le cadre de l'invention, les variations lentes de la résistivité du liquide 62 (par exemple fonction des variations de température) ne gênent pas le système dans la mesure où elles sont nettement plus lentes que celles engendrées par le passage des bulles 60.

On a schématisé sur la figure 2 le signal obtenu en sortie du module 32, en fonction du temps.

L'impédance détectée entre les électrodes 10, 20 est constante tant que du liquide 62 sans bulles circule entre les électrodes 10, 20. Lorsqu'une bulle 60 passe entre les électrodes 10, 20, le module 32 détecte une élévation sensible d'impédance.

Par ailleurs, de préférence, la résistance aux bornes des électrodes 10, 20 est mesurée en alternatif afin de supprimer tout risque de corrosion des électrodes par des phénomènes d'oxydoréduction.

Le cas échéant, un ou plusieurs condensateurs peuvent être mis en série sur les électrodes 10, 20 pour apporter une sécurité supplémentaire vis-à-vis des couples redox.

Sur la figure 1, on a par ailleurs schématisé en sortie du module de mesure d'impédance alternatif 32, un module 34 qui comporte un circuit dérivateur. Un tel circuit a pour fonction de détecter une variation de pente et par conséquent l'augmentation d'impédance déclenchée par une bulle 60 illustrée sur la figure 2.

Le cas échéant, le module 34 peut également comporter un dispositif de détection de seuil conçu pour générer un signal de sortie lorsque la variation de pente détectée sur l'impédance, en sortie du module 32, est représentative de l'apparition d'une bulle 60.

Comme on l'a illustré sur la figure 3, un dispositif de mesure de température 40 peut être adjoint au dispositif conforme à la présente invention. Un tel dispositif de mesure de température 40 peut être formé d'une résistance variable CTN, d'une jonction, ou de tout autre moyen équivalent. L'utilisation d'un tel dispositif de mesure de température permet d'obtenir simultanément une information sur le passage de bulles de gaz 60 entre les électrodes 10, 20 et la température du liquide.

Pour simplifier la liaison entre l'appareillage ainsi formé et le système d'exploitation, comme illustré sur la figure 3, il est possible d'envoyer l'information sur la présence de bulles en court-circuitant la sonde de température 40 ou en mettant celle-ci en circuit ouvert.

A cette fin, on a schématisé sur la figure 3, un interrupteur 50 placé en parallèle des fils 42, 44 de liaison du dispositif de mesure de température 40. En l'absence de détection de bulles, l'interrupteur 50 est ouvert. Le système d'exploitation dispose ainsi entre les fils 42, 44 d'une information représentative de la température mesurée par le dispositif 40.

Lorsque le module 30 détecte l'apparition d'une bulle, il pilote la fermeture de l'interrupteur 50. La détection d'un court-circuit entre les lignes 42, 44, au niveau du dispositif d'exploitation symbolise la détection d'une bulle, comme indiqué précédemment.

En variante, pour obtenir non pas un circuit fermé, mais un circuit ouvert, lors de la détection d'une bulle, l'interrupteur 50 peut être placé non point en parallèle des lignes 42, 44, mais en série sur l'une de celles-ci, l'interrupteur 50 étant alors placé en position ouverte lors de la détection d'une bulle 60. En-dehors de ces phases de détection, l'interrupteur 50 est bien entendu fermé pour autoriser l'acheminement du signal délivré par le dispositif de détection de température 40 vers le système d'exploitation.

Bien entendu la présente invention n'est pas limitée aux modes de réalisation particuliers qui viennent d'être décrits, mais s'étend à toute variante conforme à son esprit.

Comme on l'a indiqué précédemment, la présente invention s'applique en particulier, mais non exclusivement, à la détection d'un manque d'eau dans le circuit de refroidissement d'un moteur à explosion de véhicule automobile.

## Revendications

1. Détecteur de bulles de gaz dans un liquide, **caractérisé par le fait qu'**il comprend au moins deux électrodes (10, 20) et un dispositif (30) apte à mesurer la résistance électrique entre les deux électrodes (10, 20).

2. Dispositif selon la revendication 1, **caractérisé par le fait que** les électrodes (10, 20) sont disposées parallèlement à l'écoulement de liquide, de sorte que celui-ci passe entre les électrodes (10, 20).

3. Dispositif selon l'une des revendications 1 ou 2, **caractérisé par le fait que** les électrodes (10, 20) sont planes, parallèles et en regard.

4. Dispositif selon l'une des revendications 1 à 3, **caractérisé par le fait que** le dispositif de mesure de la résistance électrique entre les deux électrodes (10, 20) opère une mesure en alternatif.

5. Dispositif selon l'une des revendications 1 à 4, **caractérisé par le fait qu'**il comprend au moins un condensateur en série des électrodes (10, 20).

6. Dispositif selon l'une des revendications 1 à 5, **caractérisé par le fait que** les dimensions des électrodes (10, 20), quant à leur longueur, largeur et écartement, sont de l'ordre de grandeur du diamètre des bulles (60), de préférence comprise entre quelques mm et quelques cm.

7. Dispositif selon l'une des revendications 1 à 6, **caractérisé par le fait qu'**il comprend en outre un élément de mesure de température (40).

8. Dispositif selon l'une des revendications 1 à 7, **caractérisé par le fait qu'**il comprend en outre un élément (40) de mesure de température et au moins un interrupteur (50) associé en parallèle ou en série avec les fils de liaison (42, 44) de l'élément de mesure de température (40), lequel interrupteur (50) est piloté par le moyen de mesure de résistance électrique entre les électrodes (10, 20), pour changer l'état de l'interrupteur lors de la détection d'une bulle de gaz.

9. Dispositif selon l'une des revendications 1 à 8, **caractérisé par le fait que** le dispositif de mesure de résistance électrique (30) comprend en outre un dérivateur (34).

10. Dispositif selon l'une des revendications 1 à 9, **caractérisé par le fait que** le dispositif de mesure de résistance électrique (30) comprend en outre un détecteur de seuil (34).
